(19) Europäisches Patentamt
European Patent Office
Office européen des brevets

(11) **EP 3 896 650 B1**

(12) **EUROPEAN PATENT SPECIFICATION**

(45) Date of publication and mention
of the grant of the patent:
**30.04.2025 Bulletin 2025/18**

(21) Application number: **21168785.0**

(22) Date of filing: **16.04.2021**

(51) International Patent Classification (IPC):
**G06T 7/00** (2017.01)

(52) Cooperative Patent Classification (CPC):
**G06T 7/0006;** G06T 2207/10024;
G06T 2207/20076; G06T 2207/20081;
G06T 2207/20084; G06T 2207/30128; Y02P 90/80

(54) **QUALITY CONTROL SYSTEM FOR SERIES PRODUCTION**

QUALITÄTSKONTROLLSYSTEM FÜR SERIENPRODUKTION

SYSTÈME DE CONTRÔLE DE LA QUALITÉ POUR LA PRODUCTION EN SÉRIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2020 IT 202000008215**

(43) Date of publication of application:
**20.10.2021 Bulletin 2021/42**

(73) Proprietor: **Primeconcept S.r.l.**
**10098 Rivoli (TO) (IT)**

(72) Inventors:
• **BORRELLI, FABIO**
**10134 TORINO (IT)**
• **ROSSI, PAOLO**
**10138 TORINO (IT)**
• **POZZI, SERGIO**
**10135 TORINO (IT)**

(74) Representative: **Cutropia, Gianluigi**
**Ing. Claudio Baldi s.r.l.**
**Viale Cavallotti, 13**
**60035 Jesi (AN) (IT)**

(56) References cited:
**WO-A2-03/025858**

• **NASHAT S ET AL: "Support vector machine
approach to real-time inspection of biscuits on
moving conveyor belt", COMPUTERS AND
ELECTRONICS IN AGRICULTURE, ELSEVIER,
AMSTERDAM, NL, vol. 75, no. 1, 1 January 2011
(2011-01-01), pages 147 - 158, XP027572076,
ISSN: 0168-1699, [retrieved on 20101223]**
• **SATHE AASHAY ET AL: "Automated visual
quality inspection and sorting", 2017
INTERNATIONAL CONFERENCE ON ADVANCES
IN COMPUTING, COMMUNICATION AND
CONTROL (ICAC3), IEEE, 1 December 2017
(2017-12-01), pages 1 - 6, XP033331669, DOI:
10.1109/ICAC3.2017.8318768**

**Description**

The present invention relates to a quality control system for mass production, for example for packaging foodstuffs and the like.

Although specific reference will be made in the following to food products, the invention extends to any type of mass-produced product which must undergo quality control from an aesthetic and structural point of view.

As is well known, the packaging of food products requires product quality control in order to avoid packaging faulty products. This is the case both if the food products are artefacts produced by an industrial process and if the food products are natural products such as fruit or vegetables. Artifacts may have malformations due to the production process and natural products may have deteriorated parts due to natural causes.

A human operator is in charge of this type of quality control and has the task of visually detecting faulty products and rejecting them from a transport line so that they are not packaged.

It is clear that this type of quality control is inefficient, slow, inaccurate and prone to human error.

WO03/025858 describes a method for identifying or quantifying characteristics of interest of unknown objects, comprising training a single neural network model with training sets of known objects having known values for the characteristics; validating the optimal neural network model; and analyzing unknown objects having unknown values of the characteristics by imaging them to obtain a digital image comprising pixels representing the unknown objects, background and any debris; processing the image to identify, separate, and retain pixels representing the unknown objects from pixels and to eliminate background and debris; analyzing the pixels representing each of the unknown objects to generate data representative of image parameters; providing the data to the flash code deployed from the candidate neural network model; analyzing the data through the flash code; and receiving output data (the unknown values of the characteristics of interest of the unknown objects) from the flash code in a predetermined format.

The purpose of the present invention is to eliminate the drawbacks of known technology by providing a quality control system for series production, which is completely autonomous and does not require any human intervention.

Another purpose of the present invention is to provide such a quality control system for series production, which is efficient, fast, accurate and reliable.

These purposes are achieved in accordance with the invention with the features of independent claims 1 and 5.

Advantageous implementations of the invention appear from the dependent claims.

The quality control system for series production according to the invention is defined in claim 1.

Further features of the invention will become clearer from the following detailed description, referring to a purely illustrative and therefore non-limiting embodiment of the invention, illustrated in the accompanying drawings, wherein:

Fig. 1 is a schematic view of the quality control system for series production according to the invention;
Fig. 2 is a plan view from above of an original product image;
Fig. 3 is a binary image obtained from a conversion of the original image in Fig. 2;
Fig. 4 illustrates three different blobs of a binary image;
Fig. 5 illustrates an original image in which a border has been created around the objects;
Fig. 6 illustrates a binary image of the original image in Fig. 5;
Fig. 7 shows a concave blob and a convex envelope of this concave blob defined by marked lines;
Fig. 8 illustrates blob of Fig. 7 with two bounding boxes.
Fig. 9 illustrates a logic block diagram of a system inspection program according to the invention;
Fig. 9A is an example block diagram of the inspection program;
Fig. 10 illustrates a logic block diagram of a system control program according to the invention;
Fig. 10A shows an example block diagram of the control program;
Fig. 11A-11D illustrate an image segmentation procedure;
Fig. 12 shows an image acquired by the image capture system;
Fig. 13 shows a Gaussian distribution of any quantity varying according to a normal law with the lower and upper threshold limits indicated.

With the aid of the figures, the quality control system for series production according to the invention is described, which is indicated overall by the reference number (100).

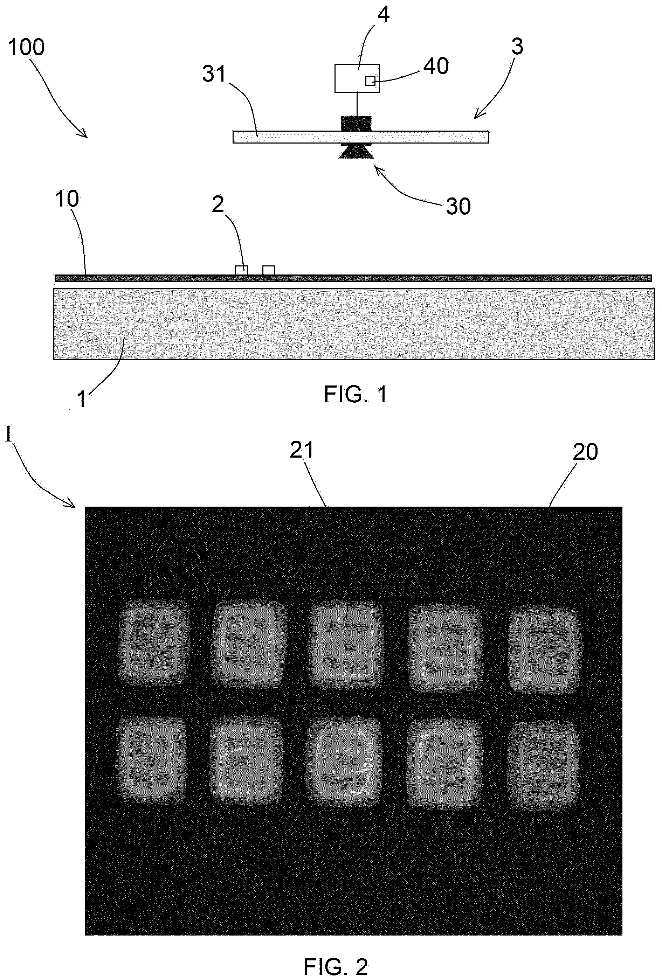

With reference to Fig. 1, the system (100) is designed to work mainly on a production line (1), i.e. a machine with a high-frequency flow of parts (2) to be inspected.

The production line (1) includes a feeding system (10) for conveying the parts (2) to be inspected. The feeding system (10) may be, for example, a conveyor belt.

The system (100) includes an optical system (3) having a gantry structure overlying the power system (10). The optical system (3) includes one or more imaging sensors (or cameras) (30) and artificial illuminators (31).

The imaging sensor (30) must be capable of acquiring images that do not produce noticeable distorting effects on the parts (2) being imaged. The illuminator (31) shall provide uniform and diffuse neutral (white light) illumination over the entire field of view of the imaging sensor (30).

The image capture sensors (30) can be:

- 2D area-scan / line-scan sensors, monochrome / colour
- 3D area-scan (Time of Flight, stereo, etc.) / line-scan (laser profiler, stereo, etc.), monochrome / colour sensors
- multispectral / hyperspectral sensors
- X-ray sensors

Multispectral sensors can be used for colour analysis and 3D sensors for aesthetic analysis, also understood as three-dimensional morphology of the analysed object.

2D monochrome/colour sensors allow the visual appearance of the object to be assessed, i.e. morphological, chromatic and aesthetic characteristics;

3D sensors also allow the evaluation of the solid shape of the object, i.e. its real three-dimensional morphology, unrelated to visual appearance. This is useful when, for example, visual feedback does not provide exhaustive information on the real shape of the object, or when it is necessary to include in the evaluation the height (thickness) of the object, rather than heights of one or more specific areas of the object;

Multispectral/hyperspectral sensors allow greater sensitivity to colour, as well as seeing the chemistry of the object being observed, not necessarily revealed by its image in the visible spectrum. It is possible to detect areas with different degrees of humidity, or parts subject to chemical alteration (such as that which occurs under the skin of an apple following trauma), or local or global alterations in chemical composition, due to production errors, pollution by foreign bodies, etc.

X-ray, or radiographic, sensors make it possible to see inside objects.

As the system (100) uses statistical techniques on the images acquired by the image capture sensor (30), it is important to ensure a certain amount of parts (2) to be observed in a self-classification and self-learning phase, even with several objects in the same image, in order to improve a characterisation of the process.

The image capture sensor (30) is connected to a control unit (4) in which a software application (40) is installed that uses neural deep learning algorithms for aesthetic control of the part (2).

The control unit (4) can be a common processor, such as a PC, with certain hardware requirements, like a graphics card that supports the heavy load of calculation and memory used by the neural algorithms of deep learning.

As the system (100) is based on statistical evaluations, it is necessary to introduce the concept of sample part or model. The model represents the ideal part against which comparisons will be made in order to qualify the parts (2) to be inspected.

Assuming a production that reflects a Gaussian or normal model in the variability of the characteristic quantities of the manufactured part, the mean value of the distribution of a quantity is approximated as its nominal value, and the standard deviation as an approximation of the tolerance to which the quantity under consideration is subject.

There are three types of characteristics considered for the evaluation of a part (2): morphological, chromatic and aesthetic.

When referring to the part, from the point of view of the machine vision system of the image capture sensor (30), this means the 2D image of the part, i.e. what is identifiable as a part in the source image.

The following morphological characteristics are taken into account:

- the area occupied by the part in the image;
- the height of the minimum bounding box relative to the part;
- the width of the minimum bounding box relative to the part;
- the height/width ratio of the minimum bounding box relative to the part;
- the filling value, i.e. the ratio of the area of the part to the area of the minimum bounding box.

Fig. 2 illustrates an original image (I) acquired from the image acquisition sensor (30), in the case where the parts (2) to be analysed are biscuits. The original image (I) includes a background (20) and a plurality of images of the parts, which are hereinafter for brevity called objects (21).

The system considers objects (21) to be anything that represents a discontinuity with respect to the background (20); it is therefore assumed that the background (20) surrounds the objects (21) throughout the image (I). Any objects (21) that touch the edge of the image are not considered.

The system works on a slightly reduced image when identifying the part, in order to eliminate the possibility of a border effect in the background affecting the procedure.

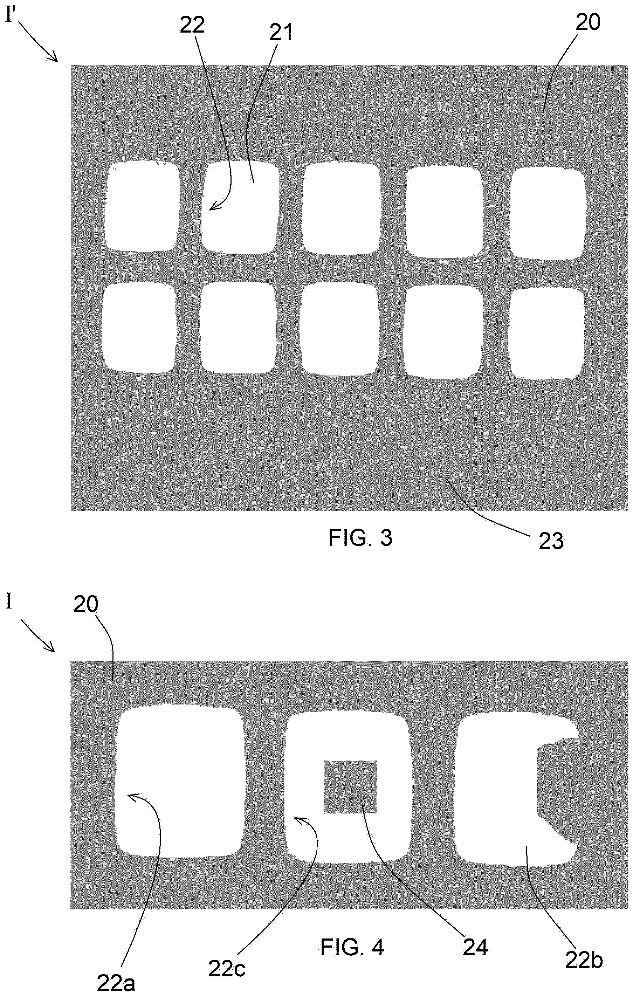

With reference to Fig. 3, the original image (I) is converted into a two-colour binary image (I'), e.g. black and white, in which blobs (Binary Large Object) (22), or regions, consisting of a group of adjacent pixels in the binary image (I') that differ in brightness from the background (20) and which therefore identify the parts (2) to be analysed, can be seen. In the background (20), white dots (23) can be seen which are not large objects and are therefore considered as background noise which is filtered out by filters.

Although the original image (I) may be in colour or grey levels, the part extraction process achieves binarization by applying a threshold that separates the pixels into 2 brightness groups.

With reference to Fig. 4, a concave blob (22a) identifying a part without errors and a convex blob (22b) identifying a part with a perimeter imperfection are illustrated. It may be verified that a blob (22c) completely includes a region (24) having the same class as the background (20). In this case, the region (24) included by the blob (22c) is considered to be a hole in the blob, hence a hole in the part.

With regard to the colour characteristics, i.e. colour, distributions are calculated for each RGB colour channel.

Aesthetic factors are assessed using artificial intelligence algorithms, after training a deep learning neural network through an automatic unsupervised learning process on a set of samples judged to be morphologically optimal, according to the canons expressed above.

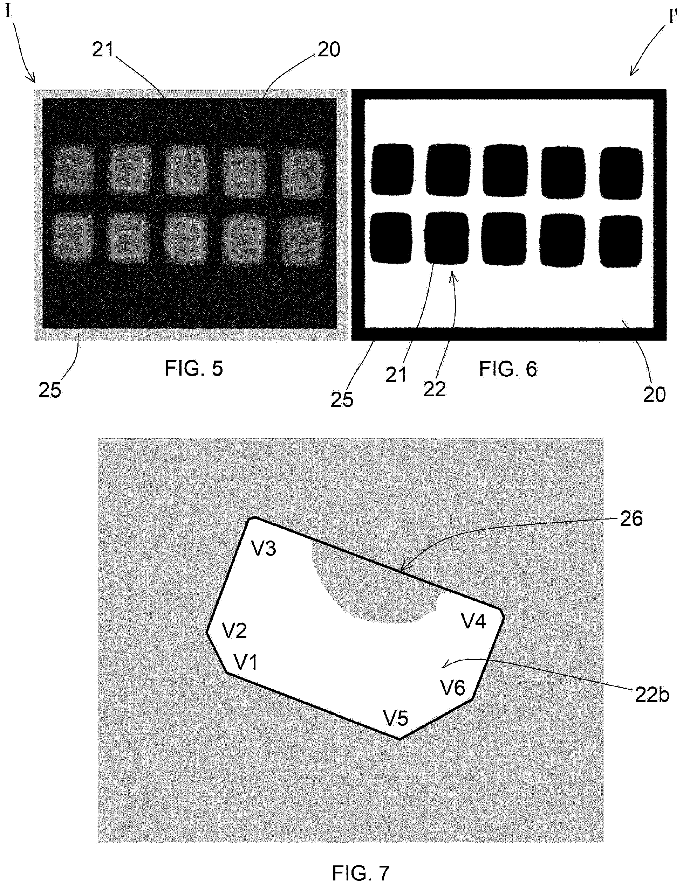

Fig. 5 illustrates an original image (I) in which a border (25) has been created around the objects (21).

Fig. 6 illustrates a binary image (I') of the original image (I) in which the blobs (22) and the border (25) have the same colour different from the background colour (20).

In this case, the presence of the border would have the effect that the objects identified would not be the biscuits, but the white part of the image in Fig. 6, similar to a perforated plate.

For image processing, the system (100) uses a basic library, specifically the Accord library, which offers a number of functions, including the extraction of blobs present in the image.

The software application (40) implements an algorithm that enables it to detect:

- a position of the centre of the blob (22),
- an area in pixels of the blob (excluding holes) and
- a bounding box aligned to the axes of the image, which contains it.

A bounding box is a rectangle containing an enclosed area. There are 3 types of bounding box:

1. Bounding box aligned to the axes: this is the rectangle, with sides parallel to the given reference system, that contains the area of the blob; where the 2D reference system is the axes of the image.
2. Bounding box with arbitrary orientation: this is the minimum area rectangle that encloses the blob according to an arbitrary mathematical criterion.
3. Object-oriented bounding box: if the object has its own reference system, for example a uniquely determinable major axis, the object-oriented bounding box is the rectangle enclosing the blob with axes parallel to the object's reference system.

The system according to the invention calculates a bounding box with arbitrary orientation, where the criterion used is the identification of the rectangle enclosing the blob so as to minimise the AreaBlob/AreaBoundingBox ratio. In order not to distort the evaluation, the system fills the holes of the identified blobs, and consequently the area of the blob used is all that is enclosed within its perimeter.

In order to construct the minimum bounding box, the system uses Graham's algorithm for finding the convex hull, i.e. the calculation of the shape, totally convex, that encloses all the pixels of the blob.

Fig. 7 shows a concave blob (22b) and a convex envelope (26) defined by the marked lines.

Graham's algorithm provides a list of vertices (V1, V2, V3, V4, V5, V6) that define the perimeter of the convex envelope (26).

Once the vertices are obtained, an iterative algorithm evaluates the bounding box of the blob (22b) with side parallel to the conjunction of two consecutive vertices of the convex envelope for each vertex pair.

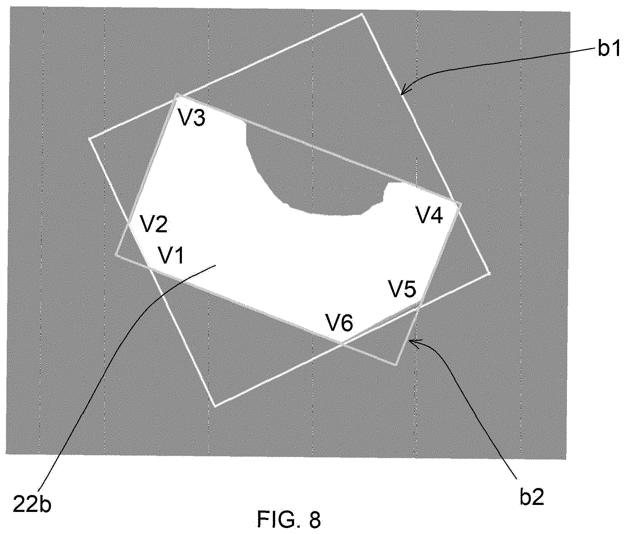

Fig. 8 shows a first bounding box (b1) obtained by considering the vertices (V1, V2) and a second bounding box (b2) obtained by considering the vertices (V1, V6).

Of all the rectangles obtained, the bounding box of interest will be the one whose AreaBlob / AreaBoundingBox ratio is the lowest. In other words, the rectangle that is filled more than any other by the blob is found.

Once a part has been identified, the system characterises it through a series of characteristics relating to morphological and colour quantities:

- Area: area of the blob;
- Width: width of the minimum bounding box;
- Height: height of the minimum bounding box;
- Fill: ratio between the area of the blob and the area of the minimum bounding box;
- Rectangularity: ratio of height to width of the minimum bounding box;

- Colour: average values on the three colour channels of the intensity of the pixels belonging to the object, i.e. those that in the original image are superimposed on the pixels of the blob that characterises the part itself.

By analysing the images acquired by the image acquisition sensor (30) while the parts (2) are running on the conveyor belt (10), the system (100) calculates and stores the morphological data relating to the various samples identified and, once a statistically significant number of samples has been reached, calculates a normal distribution for each characteristic defined above, and threshold limits of acceptability for each quantity considered.

If these threshold limits have not been calculated on the basis of parameters entered by the user in an initialisation phase (as will be explained later), the assignment of threshold limits follows the rule that they must be contained within three times the standard deviation ($3\sigma$), i.e. the value of a measured quantity x is compliant when it falls within the limits $X - 3\sigma <= x <= X + 3\sigma$.

This is the phase in which the system defines the statistics of the production process of the parts under consideration.

Since the training of the neural network for the aesthetic control occurs by means of conforming parts, that is considered good, and at the moment the system does not possess any information regarding the aesthetics of the parts, a first supply of samples for the training occurs by choosing objects that at least from the morphological point of view are optimal, thus excluding from the sampling everything that could be too big, too small or broken.

The first training of the neural network will then serve to reorder by aesthetic quality the optimal samples analysed. The system will then create a new sampling cleaned of the worst performing samples and re-train the network, thus refining the results also from an aesthetic point of view.

With reference to the normal distribution of each characteristic, an optimal sample is one for which all its morphological values do not deviate from the mean value of the distribution plus or minus the relevant threshold limits.

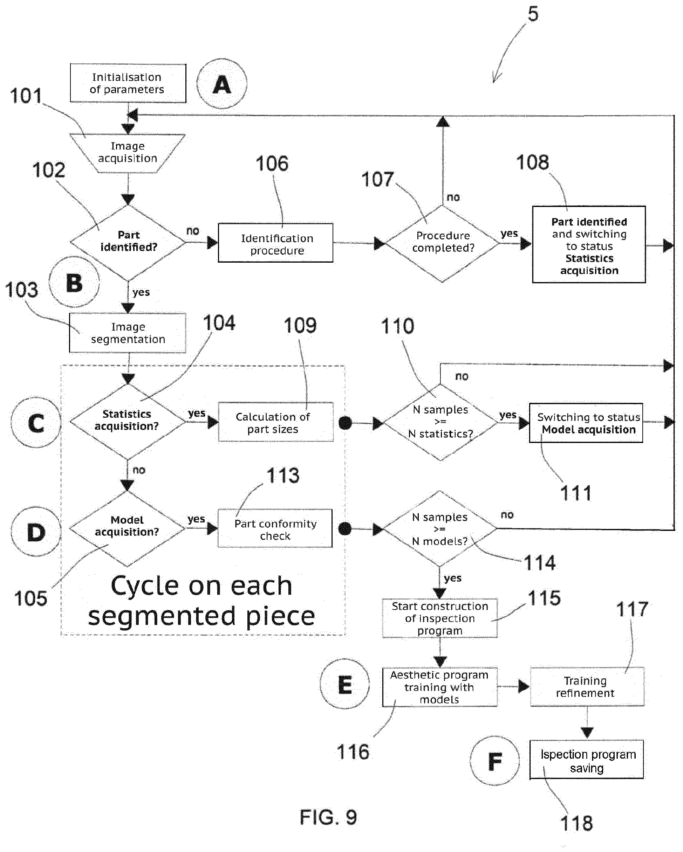

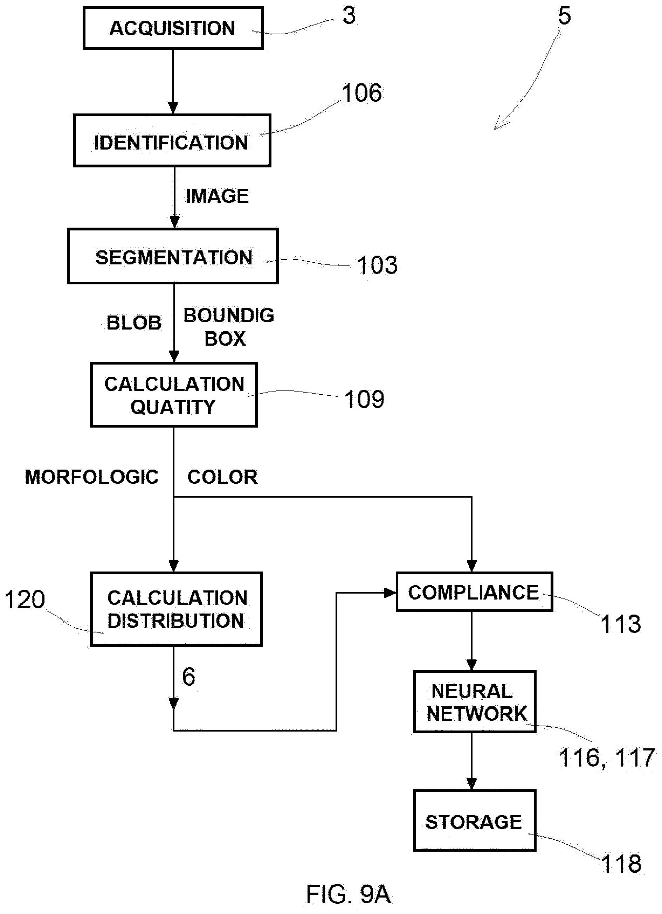

Fig. 9 illustrates, by means of a logical block diagram, an inspection program (5) which serves to calculate and store the parameters that will be used in the part quality control program during production. The inspection program (5) is part of the software application (40).

This inspection program (5) includes the following steps:

A) System initialisations

B) Part identification

C) Sample collection for a model part definition

D) Sample collection compatible with the model part

E) Neural network training using compliant samples

F) Program saving

System initialisations (A)

The inspection program (5) is created autonomously without any user intervention. However, certain parameters must be declared and initialised in order to guide the statistical process. The values of these parameters can be set manually by the user or pre-set default values can be left. In the case of using default values, user intervention can effectively be reduced to zero.

Below are three tables describing one process parameter, three part-related parameters and one optional parameter respectively.

Table 1

| PROCESS | | |
|---|---|---|
| Parameter | Description | Influence |
| P1) Ratio of non-compliance | Indicates the ratio, expressed as a percentage, between the typical number of rejects detected in a process and the total number of parts considered. | This value affects the number of samples collected to activate the statistical evaluations. |

Table 2

| PART | | |
|------|------|------|
| Parameter | Description | Influence |
| P2) Tolerance on dimensions | Indicates the range, expressed as a percentage, in which the linear dimensions of the part may vary from the nominal value. | This value affects the acceptability tolerance if the resulting tolerance is greater than the statistical tolerance according to the 3σ rule. |
| P3) Maintain proportions | Indicates whether the dimensional variation of the part is subject only to an overall scaling factor, or whether the part can deform on the various axes independently. | This option uses the previous tolerance extended on all dimensions of the part if not selected, or only on the area of the part when selected. |
| P4) Minimum defect size | Indicates the size of the minimum defect that the system should detect on the part if it is subject to cosmetic inspection. | This value affects the size of the detail to be detected during the aesthetic analysis. |

The parameter P1 contributes to the determination of the number of samples statistically necessary for the results drawn from the normal distributions of the dimensional quantities of the part extracted from the image to be considered significant.

Normally the ratio of the number of rejection events p to the number of samples n follows a binomial distribution according to the formula:

$$P(k) = \binom{n}{k} p^k (1-p)^{(n-k)}$$

where:

$$\binom{n}{k} = \frac{n!}{k!\,(n-k)!}$$

$$\overline{p} = P1$$

$$\sigma_{P1} = \sqrt{\frac{P1(1-P1)}{n}}$$

so, approximating the binomial distribution to a normal distribution and adopting the 3σ natural tolerance criterion, the control limits of the parameter P1 are:

$$P1 - 3\sigma_{P1} \leq p \leq P1 + 3\sigma_{P1}$$

Assuming that the lower limit is greater than 0, this will give the minimum number n of samples required to observe non-compliance:

$$P1 - 3\sqrt{\frac{P1(1-P1)}{n}} > 0$$

$$n > 9\frac{(1-P1)}{P1}$$

If P1 = 2% it is obtained:

$$MinimumSamplesNumber = 9*(1-0.02)/0.02 = 441$$

Parameter P2 governs the calculation of the permitted tolerance for the linear quantities of height and width of the minimum bounding box for the part, where indicating x as a linear quantity gives:

$$\overline{X}\left(1 - \frac{P2}{2}\right) \le x \le \overline{X}\left(1 + \frac{P2}{2}\right)$$

Parameter P3 governs the calculation of the permissible tolerance for the control variable S, which defines the height/width ratio of the minimum bounding box relative to the part.
If P3 is disabled, i.e. height and width can vary independently, this results in:

$$\overline{S}\frac{\left(1 - \frac{T_{DM}}{2}\right)}{\left(1 + \frac{T_{DM}}{2}\right)} \le s \le \overline{S}\frac{\left(1 + \frac{T_{DM}}{2}\right)}{\left(1 - \frac{T_{DM}}{2}\right)}$$

If P3 is enabled, i.e. if the height and width can only vary in a dependent manner according to a certain scale factor, this results in:

$$\overline{S} - 3\sigma \le s \le \overline{S} + 3\sigma$$

In the latter case, quality control is essentially a matter of checking the area of the part.
The parameter P4 is a value that is transmitted to the neural network to adjust the size of the convolution matrices by which the images are analysed during the training of the neural network, thus defining the sensitivity of the neural network to anomalies.

Table 3

| OPTIONS | | |
|---|---|---|
| Parameter | Description | Influence |
| Use of the manual contrast threshold setting option to isolate each individual part from the background | If this option is checked, then it is possible to manually adjust the contrast threshold used to distinguish each individual part from the background. This option is useful if the distinction between background and part is made difficult by a particularly unfavourable chromatic situation or a considerable irregularity in the background. It should be considered that if the system is not able to isolate the part from the background, the automatic procedures (self-classification and self-learning) will not be applicable. | Selecting this option it is possible to manually adjust the contrast threshold between individual parts and the background. |

The operations B, C and D of the block logic diagram in Fig. 9 are part of a repetitive cycle that begins with a step (101) of acquisition of an image and execution of an operation according to a state reached by the image analysis. The states of the cycle are:

- Part identification status (102): the part has not yet been extracted from the image.

- Statistical acquisition status (104): the part has been identified and images are collected, the analysis of which allows the normal distributions of the various quantities to be constructed.

- Model acquisition status (105): the part has been identified, the statistical distributions have been constructed, and the images of the parts that will feed the training of the neural network of the system are collected, i.e. the parts that are morphologically compliant.

The cycle evolves between steps B, C and D, each time a number of images necessary to perform the current step are collected and each time preparatory assessments for the next step are performed.

If during the part identification stage (102) the entire image is analysed, in the subsequent stages each detected part is isolated in a single image in order to be able to analyse it from a morphological and subsequently an aesthetic point of view. This isolation is carried out in an image segmentation block (103).

Part identification (B)

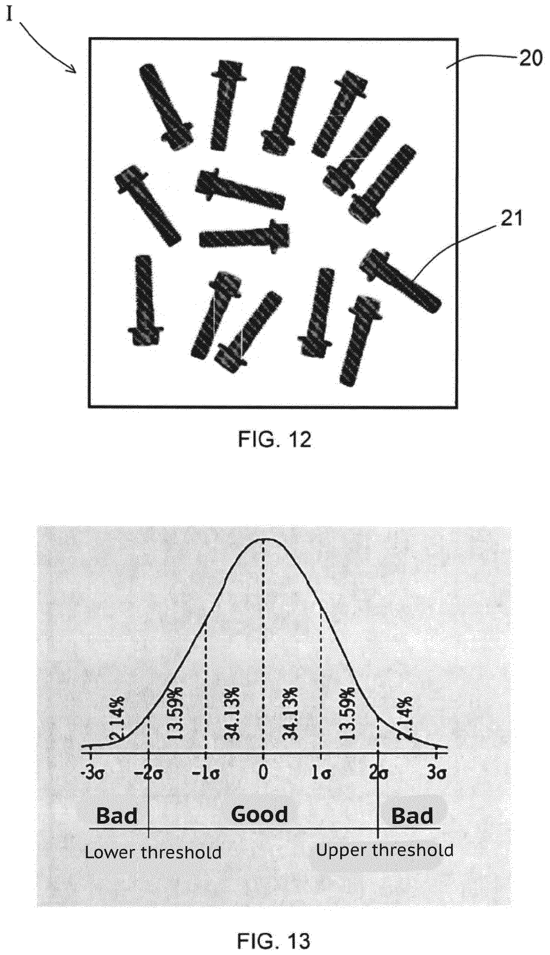

Referring to Fig. 12, the image acquisition sensor (30) acquires images (I) in which in each image (I) there are a plurality of objects (21) representing parts (2) on a background (20). In this example, the objects (20) are bolts.

In order for the inspection program (5) to work, it is necessary to isolate each object (21) from the background (20) in each image (I). In fact, the system (100) does not know anything a priori about the parts (2) to be inspected and the user is not required to specify any characteristics of these parts to be inspected.

The identification procedure of the single object (21) in the image is based on the application of techniques for the extraction of blobs present in each image, according to different filtering and parameterizations, until finding the criterion that is most likely to isolate an area that can be associated with the part of interest.

In computer vision, blob detection or region recognition is a technique that aims to detect points and/or regions in an image that differ in properties, such as brightness or colour, from the background.

The cycle is repeated for several images to avoid that the evaluation may depend on a particular situation in one image.

The image of a blob is represented by means of a binary image in which the blob can be light on a dark background or vice versa: thus the background could be interpreted as a blob and the objects of interest as holes; to avoid this misunderstanding it is assumed that no blob representing an object of interest can be in contact with the image border.

The techniques for detecting or extracting blobs are essentially based on defining a threshold of separation between background and object and declaring in advance that it is a light or dark background image with respect to the part.

Filtering operations are used to eliminate background noise that may be present on the image.

The selection criterion consists of checking, for each combination of parameters, that once the blobs present on an image have been extracted, their holes filled and the blobs extracted again from the resulting image, they occur in a number greater than 1.

The parameter configuration found is stored and reused in all subsequent steps for all new images acquired.

Then if the program is in the part identification status (102) an identification procedure (106) is carried out to identify the part and at step (107) it is checked whether the identification procedure has been completed.

If the identification procedure is completed, the part has been identified and the status is changed to the statistical acquisition step (108). In this case, the next image acquired in the image acquisition step (101) will not pass from the part identification step (102), but will go directly to the statistical acquisition step (104). On the other hand, if the identification procedure is not completed, a new image is acquired in the image acquisition step (101) and the part identification step (102) is carried out.

Collection of samples for the definition of the model part (C)

Once the identification of parts in an image is possible, the inspection program (5) will collect a statistically significant number of samples in order to construct normal distributions of all morphological and colour quantities.

The procedure by which the necessary information is extracted from each image consists of the following steps:

- Extraction of the blobs of parts in the image;
- Detection of the area of each individual blob, i.e. the area of each identified part;
- Calculation of the minimum bounding box, oriented, enclosing the blob;
- Detection of part height and width values from the data of the relevant minimum bounding box;
- Calculation of the size ratio (height/width of the minimum bounding box) and the fill ratio (blob area/minimum bounding box area);
- Use of the blob as a mask to isolate each part from the rest of the image;
- Extraction of the average colour, in the RGB colour domain, for each of the three colour channels;
- Data saving.

Once the limit number of samples to be collected has been reached, normal distributions are estimated from all the data collected for each quantity considered, thus obtaining the mean value and the variance.

In addition, upper and lower limits of acceptability are calculated for the various quantities considered as will be described later.

An image cropped on a single part will then represent an object that conforms more or less to the statistical model depending on the error of each magnitude with respect to the mean of the magnitude and whether it falls within the set limits.

Then, if the inspection program (5) is in the statistical acquisition state (104), the image segmentation step (103) is carried out in which the representative blob of the part and its bounding box are extracted, and then move on to step 109 where the morphological quantities for each part are calculated and stored.

Image segmentation (103) consists of extracting from an image a sub-image consisting of a bounding box of the blob representing the part, using the parameters determined in the part identification state.

In step 110, the number of samples analysed is counted. If the number of analysed samples is less than a statistically significant number of samples, a new image is acquired in step (101). If the number of analysed samples is equal to or greater than a statistically significant number of samples, at step 111 the state is changed and simultaneously the normal distributions of all quantities collected in the statistical acquisition step, mean value, variance and acceptance limits are estimated.

In this case, the next image acquired in the image acquisition step will go neither into the part identification block (102) nor into the statistics acquisition block (104), but directly into the pattern acquisition block (105).

Collection of samples compatible with the model part (D)

All samples whose quantities meet all the acceptability tests, i.e. the values of the quantities fall within the calculated thresholds, are considered to be potentially representative, from a morphological point of view, of the statistical model and therefore of a compliant part.

The masked areas of the parts are extracted from the new images acquired in the image acquisition step (101). A mask is a binary image in which the areas occupied by the blobs are considered transparent, while the complementary areas are considered excluded; when the image of the part is superimposed with its mask, the background around the part will be made uniformly black, cleaning the image of all extraneous elements that do not actually belong to the part.

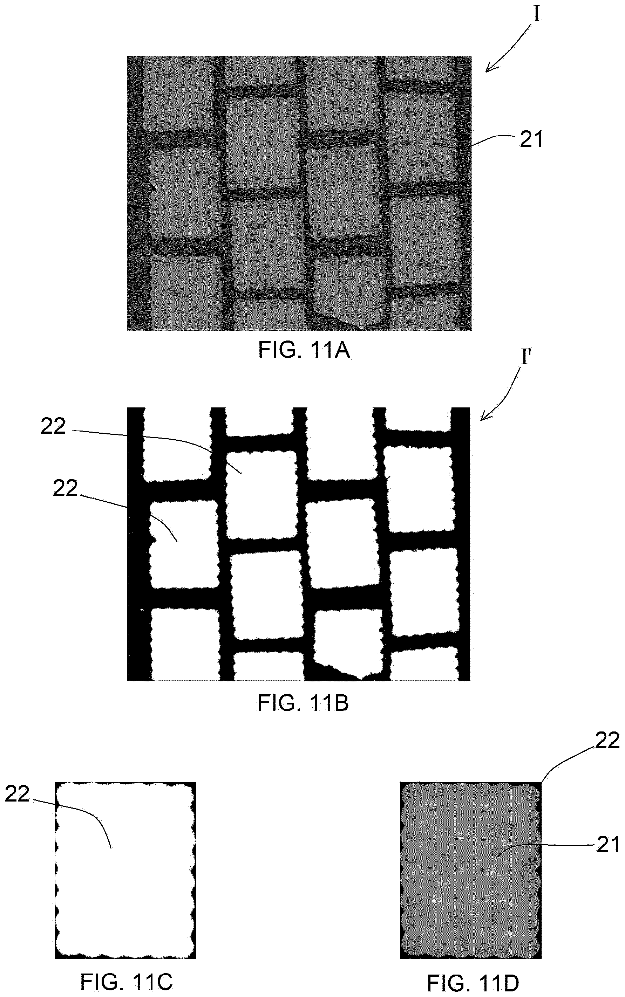

Figs. 11A-11D illustrate the image segmentation process (103).

It starts with a source image (I) with several parts (21) (Fig. 11A).

This source image (I) is transformed into a binary image (I') (Fig. 11B) having blobs (22) in correspondence with the parts (21). From the binary image (I') the blobs (22) are extracted.

Fig. 11C illustrates a single blob (22) extracted from the binary image.

The single blob (22) extracted from the binary image (I') is used as a mask superimposed on the part (21) of the source image (I) (Fig. 11D) to obtain a singularised part by cropping with cancellation of the background that now appears black.

All parts (21) from the source image are extracted, excluding those whose blobs come into contact with the edge of the image.

In step 113 a part conformity check is carried out, i.e. it is assessed whether the calculated morphological and colour quantities are within acceptable limits.

In step 114, the number of samples compatible with the part is counted; if the number of samples compatible with the part is less than the number of samples required, a new image is acquired in step 101. If the number of samples compatible with the part is greater than or equal to the number of samples required, the neural analysis step is performed.

Once this phase is completed, the morphological analysis cycle is complete and the system can proceed with the neural analysis.

Neural network training by compliant samples (E)

The artificial neural network, dedicated to the aesthetic evaluation of the part, is trained in unsupervised mode, i.e. by only classifying all the masked images collected in the previous phase as compliant/non-compliant.

It begins by starting to build the inspection program (115), i.e. the system builds software structures designed to collect all the information needed to be able to re-inspect the parts once it has been put into production.

The training is divided into 2 phases: a first training (116) and a second refinement training (117).

It must be considered that the images arrived at the stage of first training (116) are geometrically compatible with the model of the part, but do not necessarily conform due to defects of a non-morphological nature or anomalies that are within the range of tolerance accepted by the previous stage.

In the first training (116), all parts selected in the sample collection phase compatible with the model are classified as compliant. With this method, an auto-classification (or self-grading) of the parts is realised and the neural network trained on the basis of this data.

During the first training, a database is created with a list in which each sample is assigned a score. The score assigned to a sample analysed by the neural network represents the classification it has made of a part. By convention, the lower the score the greater the conformity of a sample to the average of the analysed images; the higher the score the greater the probability of obvious anomalies (i.e. out of acceptability) in the image of the individual part compared to the average.

At the end of the first training (116), a sorted list of samples is extracted from the results database according to the scores assigned.

Always assuming that the analysed phenomena obey a Gaussian law, the system will calculate a normal distribution of the scores and establish a threshold value separating the scores representing compliant and non-compliant parts.

If the Non-Compliance Ratio parameter is known, the threshold value will be deduced by means of the estimated deviation percentages and those calculated during the analysis; otherwise a natural $3\sigma$ tolerance threshold of the distribution will be used.

The second training (117), i.e. the refinement training, will then be performed, automatically classifying as compliant only those samples that do not exceed the calculated threshold value.

Saving of the inspection program (F)

The inspection program (5) performs the saving step (118), in which all the parameters set and the conformity discrimination thresholds for the various quantities taken into consideration must be stored in order to be reused when the system operates in standard production control mode.

Before actually saving the program, the system presents the user with the results obtained from the calculation, evaluating new images from observation on the production line. At this stage, it is possible to manually modify the proposed threshold values to align the system's judgement with the severity of the assessment desired for the parts under examination; for example, from a functional point of view, it is not necessarily the case that all the analysis criteria must influence the overall judgement to the same level.

The threshold can be changed for the following quantities:

- Morphological quantities: threshold on normal distributions of individual quantities;
- Colour: threshold on normal distributions of individual RGB channels;
- Aesthetic assessment: threshold on the observed range of scores.

In the case of morphological thresholds and colour analysis, the assigned values correspond to the cumulative probability that an observed value falls within a certain range of values; given a probability value, this results in a certain range within which a quantity must fall to be considered compliant.

Being a probability, the range of choices available goes from 0.5 to 1, i.e. from a null range centred on the mean value of the magnitude up to probability 1 which includes all possible values for the magnitude.

In the case of the neural threshold, the value that can be set is instead the value of deviation from the average of the scores and not the cumulative probability relative to the value, as in the previous cases; the reason for this difference is because the user is given the possibility of modifying the neural calculation also by means of other system mechanisms not concerning automatic programming, which by the nature of the libraries used will expose the threshold of acceptability to the operator in terms of value (score) and not probability.

Fig. 9A illustrates a block diagram of the inspection program in which a block (120) has been added relating to distribution calculation means, which calculate Gaussian distributions of morphological and colour quantities.

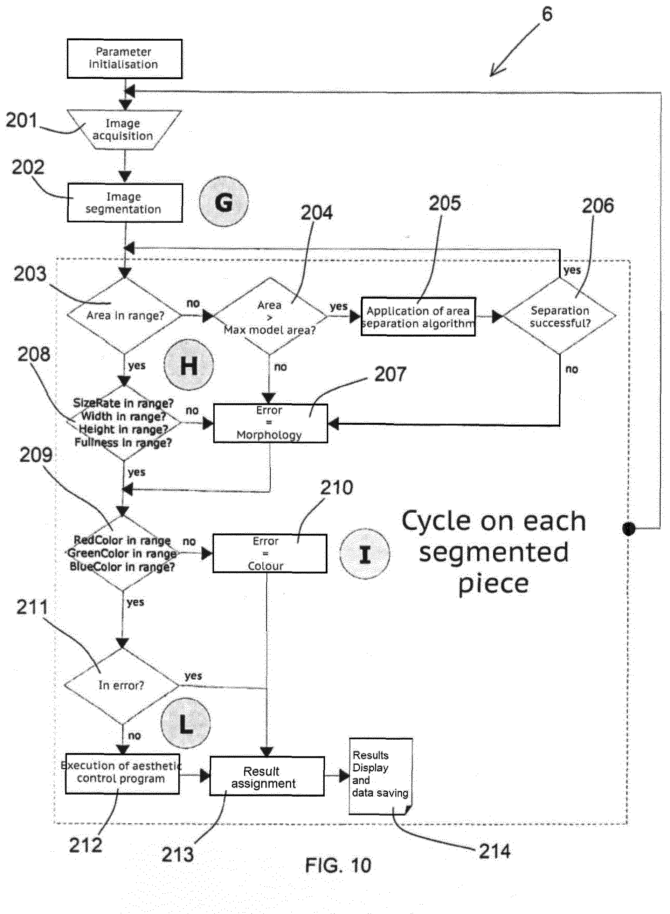

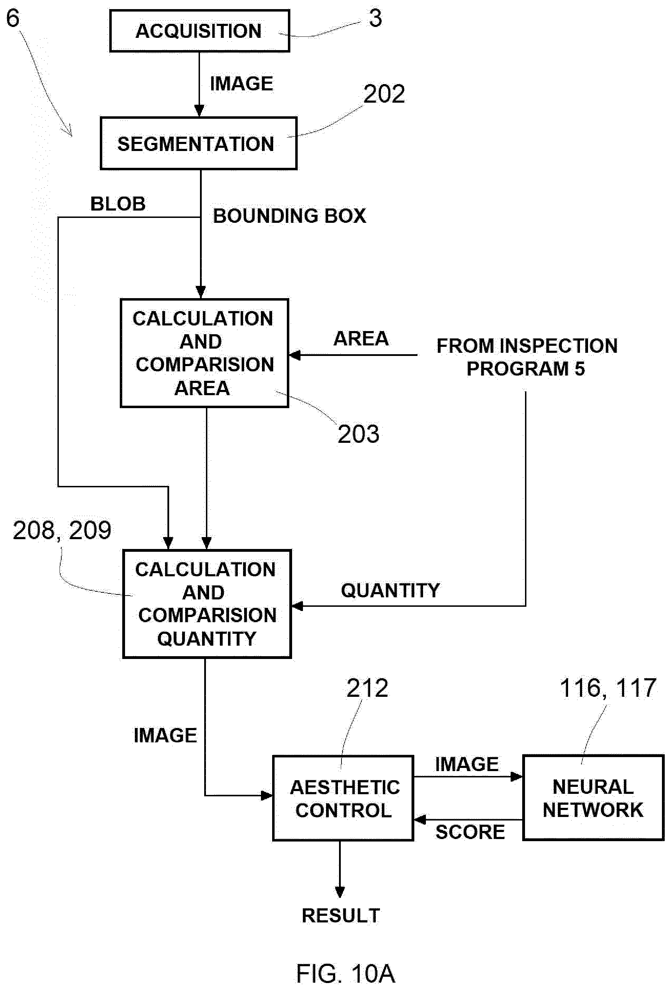

With reference to Fig. 10, a control program (6) is illustrated which implements the actual quality control on the production line (1).

All the parameters set or calculated by the inspection program (5) are stored in the system memory (100). The control program (6) provides for analysing each individual image acquired by the camera in an image acquisition step (201) according to a scheme similar to that already illustrated with reference to the inspection program (5). The inspection program (6) includes the following steps:

G) Image segmentation
H) Morphological control
I) Chromatic control
L) Aesthetic control

In order to maximise performance, if an object is found to be faulty at any stage, the analysis will be stopped and the associated reason for rejection will be the first one detected.

Image segmentation (G)

The original image acquired in the image acquisition step (201) is segmented in the image segmentation step (202), to obtain a plurality of sub-images, each representing a single part.

Segmentation is done by blob extraction.

Unlike the inspection program (5), the control program (6) stipulates that the blob extraction mode and the separation threshold with the background are predetermined and applied to each image.

Morphological control (H)

During this phase, the control program (6) considers a possibility not dealt with in the inspection program (5), namely the possibility that two or more parts are in contact or overlapping.

In fact, parts in contact or overlapping with each other cannot be analysed. The control program (6) handles cases of contact or overlapping parts autonomously, applying a separation algorithm (205). After each separation, the new areas obtained are added to a list of parts to be checked and re-examined.

In order to assess a potential contact between two parts, an already segmented image (blob) must have an area greater than a maximum acceptable value (threshold of the normal distribution allocated in the inspection program (5)).

At the end of the separation algorithm (205), a sub-area, in order to be declared a possible part and not immediately eliminated, must comply with the acceptability condition based on the height/width ratio parameter of the minimum bounding box containing it.

The separation algorithm (205) is of the Watershed type. The separation algorithm (205) extracts the separation lines between areas on the basis of the distances that the single pixels of the image have with respect to the edge of the object. This algorithm recognises random and punctual contacts well, while it tends to misinterpret and therefore, from the system's point of view, to judge prolonged contacts or juxtapositions as anomalies.

This behaviour is the desired one, as the intention is to consider potential situations of sticking of different objects, plausible in cases such as baked goods or painted objects, as rejects.

After the original image has been segmented into sub-images, an assessment is made in step (203) as to whether the sub-image area falls within the acceptability limits set out in inspection program (5).

If the area of the sub-image is not in the range, step 204 is reached, where it is checked whether the area of the sub-image exceeds the permitted limit, in which case there may be an overlap of parts or simply too large a part.

Applying algorithm (205) to an image with excess area, a new image is obtained in which, in the case of overlapping and separable parts, two or more blobs are obtained, while in the case of a part that is too large, the starting blob is obtained again; step (206) checks the quantity of blobs detected to establish whether there has been a successful separation.

If separation is successful, the program returns to step (203) in which it is evaluated whether the area of the separated sub-images is within the range. If the separation is not successful the program goes to an error message step (207).

If it appears in step (204) that the area of the sub-image is not larger than the permitted area, it goes to the error message step (207).

If in step (203) it is found that the area of the sub-image is in the range, proceed to step (208) in which it is checked whether:

- the size ratio (height/width of the minimum bounding box) is in the range
- the width of the minimum bounding box is in the range
- the height of the minimum bounding box is in the range
- the filling index (blob area/minimum bounding box area) is in the range.

If one of these parameters is out of range, step (207) is reached where an error is signalled.

If all the parameters are in the range, step is taken to colour control (I).

Colour control (I)

The colour control step (I) includes a step (209) in which the colours Red, Green and Blue are taken from the original image and compared with the ranges calculated and saved by the parameter calculation and saving program (5).

If one of these colours is not in the range, this leads to step (210) where a colour error is reported.

If all colours are in range, the aesthetic control step (L) is carried out.

Aesthetic control (L)

The aesthetic control procedure is carried out by training an artificial neural network in an unsupervised manner. The artificial intelligence, constituted by the neural network, will therefore be able to carry out a general aesthetic evaluation of each part under examination.

Step (211), which precedes the aesthetic analysis, checks for morphological or colour errors, in which case the aesthetic analysis is skipped and a rejection result is assigned directly.

Otherwise, the aesthetic evaluation of the parts is performed, step (212), feeding the neural network with the images of the individual parts extracted at step (202); the analysis checks whether the score of a part is within or above the threshold of acceptability and determines its final status as compliant or rejected.

Fig. 10A schematically illustrates the control program (6) by highlighting the exchange of information with the inspection program and the neural network.

The statistics used by the system (100) in determining the functional parameters used to implement an automatic quality control programming procedure for a part unknown to the system are described below.

The main assumption is that the quality index of the observed part respects a normal distribution, i.e. that the observed samples deviate from the mean value, imagined as an indicator of the ideal part, following the Gaussian law.

Fig. 13 shows the Gaussian distribution of a quantity with mean value 0 and standard deviation $\sigma$; it can be seen that, depending on where the acceptability thresholds are positioned on the x-axis of the Gaussian distribution, the rejection rate of the process can be determined. In this case, symmetrical thresholds are considered, i.e. a lower and an upper threshold. If the standard deviation is between the lower and upper thresholds, the part is judged as good, otherwise it is judged as reject.

It should be noted that acceptability thresholds are not intrinsic to the observed object or process, but are discretionary according to different criteria, such as functionality and aesthetic taste.

The inputs required of the operator, which affect the determination of the thresholds, are:

- Percentage of process rejection.
- Dimensional tolerance of the object expressed as a percentage.

The system (100) sequentially performs 3 types of quality analysis on an object and, if one test gives a negative result, the analysis process stops and subsequent tests are not performed. Then a reject sample is labelled according to the first failed test, if any.

The types of analysis are:

- Dimensional control (characteristics and dimensional ratios of the sample).
- Colour control (average colour of the sample on all channels available on its image).
- Aesthetic control (neural classification of the appearance of samples).

The evaluations that will be carried out are based on the following variables, of which the input variables considered set by the operator and therefore known are indicated with (input):

- $P_{TS}$ = Total percentage of process waste (input).
- $T_{DM}$ = Percent tolerance on the dimensional characteristics of the sample (input).
- $P_{DM}$ = Percentage of deviation by dimension.
- $P_{CL}$ = Percentage of waste per colour.
- $P_{NR}$ = Percentage of aesthetic deviation detected by neural analysis.

Since the controls are applied in sequence, i.e. the colour control will be applied only to the parts not rejected by the dimensional control, just as the aesthetic control will be applied only to the parts not rejected by the previous two controls:

$$N_s = N P_{TS} = N P_{DM} + N_1 P_{CL} + N_2 P_{NR}$$

$$N_1 = N \left( 1 - P_{DM} \right)$$

$$N_2 = N(1 - P_{DM})(1 - P_{CL})$$

$$P_{TS} = P_{DM} + (1 - P_{DM})P_{CL} + (1 - P_{DM})(1 - P_{CL})P_{NR}$$

of which the variable $P_{TS}$ is the known quantity, Ns the number of deviations and N the number of samples.

Probability and dimensional control

In establishing the relative values of the percentages that go to determine $P_{TS}$, it can be said that the percentage of $P_{DM}$ dimensional deviation will be influenced essentially by $T_{DM}$.

Hence, once the normal distributions have been estimated on a sufficiently large sample of the dimensional characteristics, the mean values represent the estimate of the nominal value of the quantity, while the thresholds of acceptability will be established by means of $T_{DM}$; it will then be said that a quantity observed on a sample will be acceptable if it meets the following condition:

$$\Delta x = T_{DM} \overline{X}$$

$$\overline{X} - \frac{\Delta x}{2} \leq x \leq \overline{X} + \frac{\Delta x}{2}$$

$$\overline{X}\left(1 - \frac{T_{DM}}{2}\right) \leq x \leq \overline{X}\left(1 + \frac{T_{DM}}{2}\right)$$

Given the normal distribution, the probability or percentage that a measurement does not belong to the desired compliance interval will be:

$$P_{DM} = 1 - \int_{\overline{X}\left(1 - \frac{T_{DM}}{2}\right)}^{\overline{X}\left(1 + \frac{T_{DM}}{2}\right)} \frac{1}{\sigma \sqrt{2\pi}} e^{-\frac{1}{2}\left(\frac{x - \overline{X}}{\sigma}\right)^2}$$

where the integral expresses the cumulative distribution function, which represents the probability that a value belongs to the conformity band, and which in the following expressions will be abbreviated to $C_{DF}(a, b)$ (Cumulative Distribution Function), i.e. in the previous case

$$C_{DF}(-XT_{DM}/2, XT_{DM}/2).$$

Probability and colour control

Having established the size threshold value, it is necessary to qualify the colour control on the sample. This assessment is highly dependent on the process and the type of assessment to be carried out, and whatever sample is used contains no analytical guidance on the criterion to be adopted, nor is it clear what type of index any external input might provide.

For this reason, the $3\sigma$ natural tolerance is used, which accepts 99.8% of the samples in a population as conforming and only 0.2% as rejects, thus aiming to detect only the most striking situations.

$$P_{CL}=1-\int_{\overline{X}-3\sigma}^{\overline{X}+3\sigma}\frac{1}{\sigma\sqrt{2\pi}}e^{-\frac{1}{2}\left(\frac{x-\overline{X}}{\sigma}\right)^2}=1-CDF(-3\sigma,3\sigma)$$

It should be noted that neural aesthetics analysis is also capable of detecting anomalies by colour, especially when images not formatted in grey levels are used, so that this type of analysis is given the task of detecting deviations from the actual population.

It is therefore possible that an overestimation of the deviations may occur, which may be corrected at the end of the analysis, when the system offers the possibility of manually correcting the different thresholds.

Probability and aesthetic control

Once the first two analyses have been completed, the neural network-based aesthetic control remains; the rejection rate i will be:

$$P_{NR}=\frac{P_{TS}-P_{DM}-(1-P_{DM})\cdot P_{CL}}{(1-P_{DM})\cdot(1-P_{CL})}$$

If the neural network is trained using unclassified sample images, or rather all classified as compliant, the training algorithm will provide a score for each sample that is higher the further it deviates from the majority group, which in the system is assumed to be the compliant samples.

Assuming a Gaussian distribution also for the scores and calculating the probability of the deviation, it is possible to extract from the statistical function the value of the score corresponding to this probability, and elect it as the discriminating value between compliant and non-compliant parts.

From probability to acceptability thresholds

Once the samples have been collected and the normal probability distributions have been constructed for the various measured quantities, it is necessary to extract the threshold values from the functions which are to be used to label a certain quantity, and consequently an observed sample, as conforming or rejecting.

Once the limits of a quantity have been established, the threshold R that is used for evaluation and made available to the operator to modify the system behaviour is represented by the percentile of the cumulative function that includes the threshold values of the distribution.

The reason for using the percentile is to relate the probability value of obtaining a certain result to a specific range of values representing the acceptability range.

Operational considerations

The percentile value of a distribution, which is used as a threshold value in size and colour control, can only be assessed by using samples and rearranging them and not by an analytical formula. This procedure makes it laborious to recalculate the acceptability threshold R if the associated probability values P are changed.

If a normalised normal distribution is used, i.e. with mean value equal to 0 and standard deviation = 1, the percentile corresponds to the variable z representing the abscissa scale of the distribution itself, and is related to the original values of the non-normalised distribution according to the formula:

$$z=\frac{x-\overline{X}}{\sigma}$$

and distribution corresponding to:

$$p(z) = \frac{1}{\sqrt{2\pi}} e^{-\frac{1}{2}z^2}$$

Dimensional inspection

Dimensional inspection is the first one applied to a part and refers to the evaluation of its dimensional and morphological characteristics.

The input data required is the percentage of dimensional variability that the object can assume compared to its ideal value, which in a statistical evaluation is assumed to be the average value.

This percentage relates to the linear dimensions of the part, and is therefore attributed to the width and height of the minimum bounding box enclosing the object, which is determined by the system during the image analysis and segmentation phase.

For the above, width (W) and height (H) should comply with the following conditions for the object to be potentially compliant

$$\overline{W}\left(1 - \frac{T_{DM}}{2}\right) \leq w \leq \overline{W}\left(1 + \frac{T_{DM}}{2}\right)$$

$$\overline{H}\left(1 - \frac{T_{DM}}{2}\right) \leq h \leq \overline{H}\left(1 + \frac{T_{DM}}{2}\right)$$

In order to simplify the introduction of the inputs, a single $T_{DM}$ tolerance is referred to for both quantities, although these may be subject to different variability, and therefore standard deviations, affecting differently the probability of dimensional deviation expressed by the $P_{DM}$ variable, which in turn will affect the determination of the thresholds of the colour and aesthetic controls.

Maintaining a conservative attitude, the system chooses between the two tolerances, the tolerance that determines the maximum $P_{DM}$ value, making the analysis less tolerant.

The $R_{DM}$ threshold value characterising the dimensional discriminant of the system will therefore be:

$$R_{DM} = Min\left[CDF\left(-\overline{H}\frac{T_{DM}}{2}, \overline{H}\frac{T_{DM}}{2}\right), CDF\left(-\overline{W}\frac{T_{DM}}{2}, \overline{W}\frac{T_{DM}}{2}\right)\right]$$

However, the system does not only check the width and height to determine the morphological conformity of the part, as these two quantities concern the bounding box and not the object itself. The check is therefore extended to include the following additional values:

Part area A:

$$\overline{A}\left(1 - \frac{T_{DM}}{2}\right)^2 \leq a \leq \overline{A}\left(1 + \frac{T_{DM}}{2}\right)^2$$

-   Height/width ratio S:

$$\overline{S}\frac{\left(1-\dfrac{T_{DM}}{2}\right)}{\left(1+\dfrac{T_{DM}}{2}\right)}\leq s\leq\overline{S}\frac{\left(1+\dfrac{T_{DM}}{2}\right)}{\left(1-\dfrac{T_{DM}}{2}\right)}$$

or, in the case of admitting only variations of scale, as permitted by the system, there would be:

$$\overline{\overline{S}}\leq s\leq\overline{\overline{S}}$$

which having to represent a realistic situation is transformed, by assumption:

$$\overline{S}-3\sigma\leq s\leq\overline{S}+3\sigma$$

Filling rate F, i.e. the ratio of object area to minimum bounding box area, where the tolerance is assumed to be proportional to the linear tolerance:

$$\overline{F}\left(1-\frac{T_{DM}}{2}\right)\leq f\leq\overline{F}\left(1+\frac{T_{DM}}{2}\right)$$

Once the limits of the various quantities have been established, the $R_{DM}$ threshold that is used for evaluation and made available to the operator to modify the system's behaviour, is represented by the percentile of the $P_{DM}$ probability value introduced previously.

The reason for using the percentile is to relate the probability value to a specific range of values representing the range of acceptability.

Colour control

For colour control, the same considerations apply as for dimensional quantities, but the limits are arbitrarily assumed to be $3\sigma$, for each of the colour channels:

$$\overline{C}-3\sigma\leq c\leq\overline{C}+3\sigma$$

and thus the control threshold, calculated on the normalised normal distribution:

$$R_{CL}=CDF(-3,3)$$

Here again, the $R_{CL}$ threshold represents the relative percentile of the $P_{CL}$ probability over the considered interval.

Aesthetic control

The neural network for aesthetic control is trained using the samples not discarded in the previous control steps, and for which a percentage deviation of $P_{NR}$ is expected.

The training of the neural network calculates the set of coefficients of the network itself, which allow to attribute a score to each sample once it has been submitted to the network analysis. Assuming that these scores can be represented by a Gaussian semi-distribution with a mean value equal to the minimum score, the value of $P_{NR}$ allows to establish which

16

score corresponds to this probability and to define as $R_{NR}$ the discriminating value between conformity and rejection.

Defined {scores} as the set of sampling scores of size N, it is obtained:

$$\overline{E} = Min\{scores\}$$

$$\sigma = \sqrt{\frac{\sum_{i=0}^{N}\left(\{scores\}[i] - \overline{E}\right)^2}{N}}$$

and the transformed $P_{NR}$ formula:

$$P_{NR} = \frac{P_{TS} - P_{DM} - (1 - P_{DM}) \cdot P_{CL}}{(1 - P_{DM}) \cdot (1 - P_{CL})} = \frac{P_{TS} - (1 - R_{DM}) - (1 - R_{CL}) R_{DM}}{R_{DM} R_{CL}}$$

the $R_{NR}$ threshold will be obtained:

$$R_{NR} = \overline{E} + PPF(1 - P_{NR})\sigma$$

where $P_{PF}$ (Percent Point Function) is the inverse function of the normalised cumulative normal function giving the threshold of acceptability corresponding to the probability (1 - $P_{NR}$), $P_{NR}$ being the percentage of deviation.

To sum up, given the inputs:

- $P_{TS}$ = Total rejection percentage of the process.
- $T_{DM}$ = Percentage tolerance on the dimensional characteristics of the sample.

and outputs:

- $R_{DM}$ = Acceptability threshold per dimension.
- $R_{CL}$ = Acceptability threshold per colour.
- $R_{NR}$ = Aesthetic acceptability threshold.

The result is:

$$R_{DM} = Min\left[CDF\left(-\overline{H}\frac{T_{DM}}{2}, \overline{H}\frac{T_{DM}}{2}\right), CDF\left(-\overline{W}\frac{T_{DM}}{2}, \overline{W}\frac{T_{DM}}{2}\right)\right]$$

$$R_{CL} = CDF(-3, 3)$$

$$R_{NR} = \overline{E} + PPF\left(1 - \left(\frac{P_{TS} - (1 - R_{DM}) - (1 - R_{CL}) R_{DM}}{R_{DM} R_{CL}}\right)\right)\sigma_{NR}$$

and for verification:

$$T_{DM} = 2\,Max\left[\frac{\sigma_H\,PPF(R_{DM})}{\overline{H}}, \frac{\sigma_W\,PPF(R_{DM})}{\overline{W}}\right]$$

$$P_{TS} = \frac{(1-R_{DM})+R_{DM}(1-R_{CL})+R_{DM}\,R_{CL}\left(1-CDF\left(\frac{R_{NR}-\overline{E}}{\sigma_{NR}}\right)\right)}{2}$$

**Claims**

1. Quality control system (100) including:

   - a conveyor (10) on which parts (2) to be checked are placed,
   - image capture means (3) for capturing images (I) of the parts (2) on the conveyor, and
   - a control unit (4) for receiving and processing the images (I) acquired by the image capture means (3);

   **characterized in that**

   said control unit (4) has a software application (40) comprising instructions, which, when executed by the control unit, cause the control unit to execute an inspection program (5) and a control program (6); the inspection program (5) being configured to calculate and store quantities and threshold limits which will be used in the control program (6), and the control program (6) being configured to determine whether each part (2) is compliant or to be rejected; said inspection program (5) including:

   - identification means (106) configured to identify the presence of imaged parts (21) from an original image (I), acquired by the image capture means (3), in order to initiate the inspection program;
   - segmentation means (103) configured to segment the original image (I) into sub-images representative of each part; wherein each sub-image is a bounding box (26) of a blob (22) of the original image (I) and the segmentation means (103) detect the blob (22) and the corresponding bounding box (26) and are configured to identify a single part from the blob (22) and from the bounding box (26) of the blob (22);
   - quantities calculation means (109) configured to calculate, for each part identified by the segmentation means (103), morphological quantities based on the blob (22) and on the bounding box (26) and colour quantities based on the three RGB colour channels of the intensity of the pixels of the original image corresponding to the blob (22);
   - distributions calculation means (120) configured to calculate a Gaussian distribution for each morphological and colour quantity calculated by said quantities calculation means (109) on a statistically significant number of sample parts;
   - compliance verification means (113) configured to check whether the morphological and colour quantities calculated for each part fall within threshold limits derived from said Gaussian distributions of the morphological and colour quantities calculated by said compliance verification means (109),
   - a neural network (116, 117) that is fed with images of the parts deemed compliant by the compliance verification means (113) and trained in an unsupervised manner so as to score each sub-image representing a part,

   said neural network being configured for an aesthetic control, i. e. a neural classification of the appearance of samples;

   - storage media (118) configured to store the threshold limits of each quantity and the quantities for each part taken into account;

in which image segmentation and the calculation of morphological and colour quantities in the inspection program (5) is repeated for a significant number of samples;
said control program (6) including:

- segmentation means (202) configured to segment an original image (I) acquired by the image capture means (3) into representative sub-images of each part; wherein each sub-image is a blob (22) of the original image (I), and the segmentation means (103) of the control program detect the blob (22) and a corresponding bounding box (26);
- calculation and area comparison means (203) for an area control; said calculation and area comparison means (203) being configured to calculate the area of the sub-image, using the blob (22) and bounding box (26) of the blob (22) of the segmentation means (202) and compare it with an indicative area of the part calculated by the inspection program (5), wherein, if said comparison fails, the item is classified as non-compliant;
- quantities calculation and comparison means (208, 209) for a morphologic control and a colour control; said quantities calculation and comparison means (208, 209) being configured to calculate the morphological and colour quantities of each sub-image and compare them with the morphological and colour quantities calculated by the inspection program (5), wherein, if said comparison fails, the item is classified as non-compliant;
- aesthetic control means (212) for an aesthetic control; said aesthetic control means (212) being configured to feed said trained neural network (116, 117) with images of individual parts in order to check whether the score of a part is within or exceeds an acceptability threshold calculated by the inspection program (5) and determine a final status of the part as compliant or to be rejected;

wherein the morphological control is carried out only if the area control is compliant, the color control is carried out only if the morphological control is compliant and the aesthetic control is carried out only if the colour control is compliant.

2. System according to claim 1, wherein said morphological quantities comprise:

- area of the blob;
- width of the minimum bounding box;
- height of the minimum bounding box;
- Fill: ratio between the area of the blob and the area of the minimum bounding box;
- Rectangularity: ratio of height to width of the minimum bounding box.

3. System according to claim 1 or 2, wherein each threshold limit value for each morphological and colour quantity is given by three times the standard deviation ($3\sigma$) of the Gaussian distribution of the quantity calculated by said distributions calculation means (120).

4. System (100) according to anyone of the preceding claims, wherein said inspection program (5) includes initialization means (A) configured to allow the user to enter parameters (P1, P2, P3, P4) for calculating threshold limit values.

5. Quality control procedure comprising the following steps:

- feeding of parts (2) to be controlled on a conveyor (10),
- image capture (101) of the parts (2) on the conveyor by means of image capture means (3), and
- execution by means of a control unit (4) of an inspection program (5) that includes the steps of
- identification (106) of the presence of parts (21) in an original image (I) acquired by the image capture means (3) to start the inspection program (5);
- segmentation (103) of the original image (I) into sub-images representative of each part; in which each sub-image is a bounding box (26) of a blob (22) of the original image (I) and the blob (22) and corresponding bounding box (26) of the blob (22) are detected and a single part is identified from the blob (22) and the bounding box (26) of the blob (22);
- quantities calculation (109) in which, for each part identified by the segmentation means (103), morphological quantities are calculated based on the blob (22) and on the bounding box (26) and colour quantities based on the three RGB colour channels of the intensity of the pixels of the original image corresponding to the blob (22);
- distributions calculation (120) in which a Gaussian distribution is calculated for each morphological and colour quantity on a statistically significant number of sample parts;

- compliance check (113) to verify whether the morphological and colour quantities calculated for each part are within threshold limits derived from said Gaussian distributions of the morphological and colour quantities;
- feeding of a neural network (116, 117) with the images of the parts deemed compliant by the compliance check (113) and training of the neural network in an unsupervised manner so that it assigns a score to each sub-image representing a part, said neural network being configured for an aesthetic control, i. e. a neural classification of the appearance of samples; and
- storing (118) the threshold limits of each quantity and the quantities for each part taken into account;
in which image segmentation and calculation of morphological and colour quantities in the inspection program (5) is repeated for a significant number of samples;
execution by means of the control unit (4) of a control program (6) which includes the steps of:

- segmentation (202) of an original image (I) acquired by the image capture means (3) into sub-images representative of each part; wherein each sub-image is a blob (22) of the original image (I), and the blob (22) and a corresponding bounding box (26) are detected;
- area calculation and comparison (203) for an area control to calculate the area of the sub-image, using the blob (22) and bounding box (26) of the blob (22) detected in the segmentation and to compare it with an indicative area of the part calculated by the inspection program (5), wherein, if said comparison fails, the item is classified as non-compliant;
- quantities calculation and comparison (208, 209) for a morphologic control and colour control to calculate the morphological and colour quantities of each sub-image and compare them with the morphological and colour quantities calculated by the inspection program (5), wherein, if said comparison fails, the item is classified as non-compliant;
- aesthetic control (212) for an aesthetic control in which said trained neural network (116, 117) is fed with images of individual parts in order to check whether the score of a part is within or exceeds an acceptability threshold calculated by the inspection program (5) and to determine a final status of the part as compliant or to be rejected;

wherein the morphological control is carried out only if the area control is compliant, the color control is carried out only if the morphological control is compliant and the aesthetic control is carried out only if the colour control is compliant.

6. Procedure according to claim 5, wherein:
these morphological quantities include:

- area of the blob;
- width of the minimum bounding box;
- height of the minimum bounding box;
- Filling rate: ratio of the area of the blob to the area of the minimum bounding box; and
- Rectangularity: ratio of height to width of the minimum bounding box.

7. Procedure according to claim 5 or 6, wherein each threshold limit value for each morphological and colour quantity is given by three times the standard deviation ($3\sigma$) of the Gaussian distribution of the quantity.

8. Procedure according to any one of claims 5 to 7, wherein said inspection program (5) includes an initialization step (A) for allowing the user to enter parameters (P1, P2, P3, P4) for calculating threshold limit values.

**Patentansprüche**

1. Qualitätskontrollsystem (100), einschließlich:

- ein Förderband (10), auf dem zu kontrollierende Teile (2) angeordnet sind,
- Bilderfassungsmittel (3) zum Erfassen von Bildern (I) der Teile (2) auf dem Förderband und
- eine Kontrolleinheit (4) zum Empfangen und Verarbeiten der Bilder (I), die von den Bilderfassungsmitteln (3) erfasst wurden;

**dadurch gekennzeichnet, dass**

die Kontrolleinheit (4) eine Softwareanwendung (40) mit Anweisungen aufweist, die bei Ausführung durch die Kontrolleinheit bewirkt, dass die Kontrolleinheit ein Inspektionsprogramm (5) und ein Kontrollprogramm (6) ausführt; wobei das Inspektionsprogramm (5) zum Berechnen und Speichern von Größen und Schwellenwerten konfiguriert ist, die im Kontrollprogramm (6) verwendet werden, wobei das Kontrollprogramm (6) konfiguriert ist, um zu bestimmen, ob jedes Teil (2) konform ist oder zu verwerfen ist;
wobei das Inspektionsprogramm (5) Folgendes einschließt:

- Identifizierungsmittel (106), die konfiguriert sind, um das Vorhandensein von abgebildeten Teilen (21) aus einem Originalbild (I) zu identifizieren, das von den Bilderfassungsmitteln (3) erfasst wurde, um das Inspektionsprogramm zu starten;
- Segmentierungsmittel (103), die konfiguriert sind, um ein Originalbild (I) in Teilbilder zu segmentieren, die repräsentativ für jedes Teil sind; wobei jedes Teilbild ein Begrenzungsrahmen (26) eines Blobs (22) des Originalbildes (I) ist und die Segmentierungsmittel (103) das Blob (22) und den entsprechenden Begrenzungsrahmen (26) erfassen und konfiguriert sind, um ein einzelnes Teil aus dem Blob (22) und aus dem Begrenzungsrahmen (26) des Blobs (22) zu identifizieren;
- Größenberechnungsmittel (109), die konfiguriert sind, um für jedes von den Segmentierungsmitteln (103) identifizierte Teil morphologische Größen basierend auf dem Blob (22) und dem Begrenzungsrahmen (26) und Farbgrößen basierend auf den drei RGB-Farbkanälen der Pixelintensität des dem Blob (22) entsprechenden Originalbildes zu berechnen;
- Verteilungsberechnungsmittel (120), die konfiguriert sind, um eine Gaußverteilung für jede morphologische Größe und Farbgröße zu berechnen, die von den Größenberechnungsmitteln (109) auf einer statistisch signifikanten Anzahl von Probeteilen berechnet wurde;
- Konformitätsüberprüfungsmittel (113), die konfiguriert sind, um zu prüfen, ob die für jedes Teil berechneten morphologischen Größen und Farbgrößen innerhalb der aus den Gaußverteilungen der morphologischen Größen und Farbgrößen abgeleiteten Schwellenwerte liegen, die von den Konformitätsprüfungsmitteln (109) berechnet wurden,
- ein neuronales Netzwerk (116, 117), das mit Bildern der von den Konformitätsprüfungsmitteln (113) als konform bewerteten Teile gespeist wird und unüberwacht geschult wird, jedem Teilbild, das ein Teil repräsentiert, eine Punktezahl zuzuweisen; wobei das neuronale Netzwerk für eine ästhetische Kontrolle, d. h. eine neuronale Bewertung bezüglich des Aussehens von Probeteilen konfiguriert ist;
- Speichermittel (118), die konfiguriert sind, um die Schwellenwerte jeder Größe und die Größen für jedes zu berücksichtigende Teil zu speichern;

wobei die Segmentierung des Bildes und die Berechnung der morphologischen Größen und Farbgrößen in dem Inspektionsprogramm (5) für eine signifikante Anzahl von Probeteilen wiederholt wird;
wobei das Kontrollprogramm (6) Folgendes einschließt:

- Segmentierungsmittel (202), die konfiguriert sind, um ein von den Bilderfassungsmitteln (3) erfasstes Originalbild (I) in repräsentative Teilbilder jedes Teils zu segmentieren; wobei jedes Teilbild ein Blob (22) des Originalbildes (I) ist und die Segmentierungsmittel (103) des Kontrollprogramms das Blob (22) und einen entsprechenden Begrenzungsrahmen (26) erfassen;
- Flächenberechnungs- und -vergleichsmittel (203) für eine Flächenkontrolle; wobei die Flächenberechnungs- und -vergleichsmittel (203) konfiguriert sind, um die Fläche des Teilbildes unter Verwendung des Blobs (22) und des Begrenzungsrahmens (26) des Blobs (22) der Segmentierungsmittel (202) zu berechnen und sie mit einer indikativen Fläche des Teils zu vergleichen, die von dem Inspektionsprogramm (5) berechnet wurde, wobei der Gegenstand, wenn der Vergleich fehlschlägt, als nicht konform bewertet wird;
- Größenberechnungs- und -vergleichsmittel (208, 209) für eine morphologische Kontrolle und eine Farbkontrolle; wobei die Größenberechnungs- und -vergleichsmittel (208, 209) konfiguriert sind, um die morphologischen Größen und Farbgrößen jedes Teilbildes zu berechnen und sie mit den vom Inspektionsprogramm (5) berechneten morphologischen Größen und Farbgrößen zu vergleichen, wobei der Gegenstand, wenn der Vergleich fehlschlägt, als nicht konform bewertet wird;
- ästhetische Kontrollmittel (212) für eine ästhetische Kontrolle; wobei die ästhetischen Kontrollmittel (212) konfiguriert sind, um das geschulte neuronale Netzwerk (116, 117) mit Bildern einzelner Teile zu speisen, um zu prüfen, ob die Punktezahl eines Teils innerhalb oder außerhalb einer von dem Inspektionsprogramm (5) berechneten Akzeptanzschwelle liegt, und einen Endstatus des Teils als konform oder zu verwerfen zu bestimmen,

wobei die morphologische Kontrolle nur dann ausgeführt wird, wenn die Kontrolle der Fläche konform ist, die Farbkontrolle nur dann ausgeführt wird, wenn die morphologische Kontrolle konform ist und die ästhetische Kontrolle nur dann ausgeführt wird, wenn die Farbkontrolle konform ist.

2. System nach Anspruch 1, wobei die morphologischen Größen Folgendes umfassen:

- Fläche des Blobs;
- Breite des Mindestbegrenzungsrahmens;
- Höhe des Mindestbegrenzungsrahmens;
- Füllung: Verhältnis zwischen der Fläche des Blobs und der Fläche des Mindestbegrenzungsrahmens;
- Rechtwinkligkeit: Verhältnis zwischen Höhe und Breite des Mindestbegrenzungsrahmens.

3. System nach Anspruch 1 oder 2, wobei jeder Schwellenwert für jede morphologische Größe und Farbgröße durch das Dreifache der Standardabweichung (3$\sigma$) der Gaußverteilung der von den Verteilungsberechnungsmitteln (120) berechneten Größe gegeben ist.

4. System (100) nach einem der vorstehenden Ansprüche, wobei das Inspektionsprogramm (5) Initialisierungsmittel (A) einschließt, die konfiguriert sind, um dem Benutzer die Eingabe von Parametern (P1, P2, P3, P4) für die Berechnung der Schwellenwerte zu ermöglichen.

5. Qualitätskontrollverfahren, umfassend die folgenden Schritte:

- Zuführen von zu kontrollierenden Teilen (2) auf einem Förderband (10),
- Bilderfassen (101) der Teile (2) auf dem Förderband mittels Bilderfassungsmitteln (3) und
- Ausführen, mittels einer Kontrolleinheit (4), eines Inspektionsprogramms (5), das folgende Schritt einschließt
- Identifizieren (106) des Vorhandenseins von Teilen (21) in einem Originalbild (I), das von den Bilderfassungsmitteln (3) erfasst wurde, um das Inspektionsprogramm (5) zu starten;
- Segmentieren (103) des Originalbildes (I) in Teilbilder, die repräsentativ für jedes Teil sind; wobei jedes Teilbild ein Begrenzungsrahmen (26) eines Blobs (22) des Originalbildes (I) ist und das Blob (22) und der entsprechende Begrenzungsrahmen (26) des Blobs (22) erfasst werden und ein einzelnes Teil aus dem Blob (22) und dem Begrenzungsrahmen (26) des Blobs (22) identifiziert wird;
- Größen berechnen (109), wobei für jedes von den Segmentierungsmitteln (103) identifizierte Teil morphologische Größen basierend auf dem Blob (22) und dem Begrenzungsrahmen (26) und Farbgrößen basierend auf den drei RGB-Farbkanälen der Pixelintensität des dem Blob (22) entsprechenden Originalbildes berechnet werden;
- Verteilungen berechnen (120), wobei eine Gaußverteilung für jede morphologische Größe und Farbgröße auf einer statistisch signifikanten Anzahl von Probeteilen berechnet wird;
- Konformität prüfen (113), um zu prüfen, ob die morphologischen Größen und Farbgrößen für jedes Teil innerhalb der aus den Gaußverteilungen der morphologischen Größen und Farbgrößen abgeleiteten Schwellenwerte liegen;
- Speisen eines neuronalen Netzwerks (116, 117) mit den Bildern der Teile, die von der Konformitätsprüfung (113) als konform bewertet wurden und unüberwachtes Schulen des neuronalen Netzwerks, so dass es jedem Teilbild, das ein Teil repräsentiert, eine Punktezahl zuweist; wobei das neuronale Netzwerk für eine ästhetische Kontrolle, d. h. eine neuronale Bewertung des Aussehens der Probeteile konfiguriert ist;
- Speichern (118) der Schwellenwerte jeder Größe und der Größen für jedes zu berücksichtigende Teil; wobei die Segmentierung des Bildes und die Berechnung der morphologischen Größen und Farbgrößen in dem Inspektionsprogramm (5) für eine signifikante Anzahl von Probeteilen wiederholt wird;
- Ausführen, mittels einer Kontrolleinheit (4) eines Kontrollprogramms (6), das folgende Schritte einschließt:
- Segmentieren (202) eines von den Bilderfassungsmitteln (3) erfassten Originalbildes (I) in Teilbilder, die für jedes Teil repräsentativ sind; wobei jedes Teilbild ein Blob (22) des Originalbildes (I) ist und das Blob (22) und ein entsprechender Begrenzungsrahmen (26) erfasst werden;
- Flächen berechnen und vergleichen (203) für eine Flächenkontrolle, um die Fläche des Teilbildes unter Verwendung des Blobs (22) und des Begrenzungsrahmens (26) des Blobs (22) zu berechnen, die bei der Segmentierung erfasst wurden, und sie mit einer indikativen Fläche des Teils zu vergleichen, die von dem Inspektionsprogramm (5) berechnet wurde, wobei der Gegenstand, wenn der Vergleich fehlschlägt, als nicht konform bewertet wird;
- Größen berechnen und vergleichen (208, 209) für eine morphologische Kontrolle und Farbkontrolle, um die morphologischen Größen und Farbgrößen jedes Teilbildes zu berechnen und sie mit den vom Inspektionsprogramm (5) berechneten morphologischen Größen und Farbgrößen zu vergleichen, wobei der Gegenstand, wenn der Vergleich fehlschlägt, als nicht konform bewertet wird;
- ästhetisches Kontrollieren (212) für eine ästhetische Kontrolle, wobei das geschulte neuronale Netzwerk (116, 117) mit Bildern einzelner Teile gespeist wird, um zu prüfen, ob die Punktezahl eines Teils innerhalb oder außerhalb einer von dem Inspektionsprogramm (5) berechneten Akzeptanzschwelle liegt, und einen Endstatus des Teils als konform oder zu verwerfen zu bestimmen;

wobei die morphologische Kontrolle nur dann ausgeführt wird, wenn die Kontrolle der Fläche konform ist, die Farbkontrolle nur dann ausgeführt wird, wenn die morphologische Kontrolle konform ist und die ästhetische Kontrolle nur dann ausgeführt wird, wenn die Farbkontrolle konform ist.

6. Verfahren nach Anspruch 5, wobei:
die morphologischen Größen Folgendes einschließen:

- Fläche des Blobs;
- Breite des Mindestbegrenzungsrahmens;
- Höhe des Mindestbegrenzungsrahmens;
- Füllung: Verhältnis zwischen der Fläche des Blobs und der Fläche des Mindestbegrenzungsrahmens; und
- Rechtwinkligkeit: Verhältnis zwischen der Höhe und der Breite des Mindestbegrenzungsrahmens.

7. Verfahren nach Anspruch 5 oder 6, wobei jeder Schwellenwert für jede morphologische Größe und Farbgröße durch das Dreifache der Standardabweichung ($3\sigma$) der Gaußverteilung der Größe gegeben ist.

8. Verfahren nach einem der Ansprüche 5 bis 7, wobei das Inspektionsprogramm (5) einen Initialisierungsschritt (A) einschließt, der dem Benutzer die Eingabe von Parametern (P1, P2, P3, P4) für die Berechnung der Schwellenwerte ermöglicht.

**Revendications**

1. Système de contrôle de la qualité (100) comprenant :

- un transporteur (10) sur lequel sont disposées des pièces (2) à contrôler,
- des moyens de capture d'image (3) aptes à capturer des images (I) des pièces (2) sur le transporteur, et
- une unité de commande (4) apte à recevoir et traiter les images (I) capturées par les moyens de capture d'image (3) ;

**caractérisé en ce que**

ladite unité de commande (4) a une application logicielle (40) comprenant des instructions qui, lorsqu'exécutées par l'unité de commande, permettent à l'unité de commande d'exécuter un programme d'inspection (5) et un programme de contrôle (6) ; le programme d'inspection (5) étant configuré pour calculer et sauvegarder des grandeurs et des limites de seuil qui seront utilisées dans le programme de contrôle (6) et le programme de contrôle (6) étant configuré pour déterminer si chaque pièce (2) est conforme ou à mettre au rebut ;
ledit programme d'inspection (5) comprenant :

- des moyens d'identification (106) configurés pour identifier la présence d'images de pièces (21) à partir d'une image d'origine (I), capturée par les moyens de capture, de manière à lancer le programme d'inspection ;
- des moyens de segmentation (103) configurés pour segmenter l'image d'origine (I) en sous-images représentatives de chaque pièce ; où chaque sous-image est une matrice de caractère (ou bounding box en anglais) (26) d'un bloc (ou blob en anglais) (22) de l'image d'origine (I) et les moyens de segmentation (103) détectent le bloc (22) et la matrice de caractère correspondante (26) et sont configurés pour identifier une pièce individuelle à partir du bloc (22) et de la matrice de caractère (26) du bloc (22) ;
- des moyens de calcul des grandeurs (109) configurés pour calculer, pour chaque pièce identifiée par les moyens de segmentation (103), des grandeurs morphologiques basées sur le bloc (22) et sur la matrice de caractère (26) et des grandeurs de couleur basées sur trois canaux de couleur RGB de l'intensité des pixels de l'image d'origine correspondante au bloc (22) ;
- des moyens de calcul des distributions (120) configurés pour calculer une distribution gaussienne pour chaque grandeur morphologique et de couleur calculée par lesdits moyens de calcul des grandeurs sur la base d'un nombre statistiquement significatif de pièces échantillon ;
- des moyens de contrôle de conformité (113) configurés pour vérifier si les grandeurs morphologiques et de couleur calculées pour chaque pièce rentrent dans les limites de seuil dérivées des dites distributions gaussiennes des grandeurs morphologiques et de couleur calculées par lesdits moyens de calcul des grandeurs (109),
- un réseau neuronal (116, 117) qui est alimenté avec les images des pièces jugées conformes par les moyens de contrôle de conformité (113) et formé de manière non supervisée, afin d'attribuer un score à chaque sous-image qui représente une pièce ; ledit réseau neuronal étant configuré pour un contrôle esthétique, par exemple une classification neurale relative à l'aspect des échantillons ; et
- des moyens de sauvegarde (118) configurés pour sauvegarder les limites de seuil de chaque grandeur et les grandeurs pour chaque pièce prise en compte ;

où la segmentation de l'image et le calcul des grandeurs morphologiques et de couleur dans le programme d'inspection (5) est répétée pour un nombre significatif d'échantillons ;
ledit programme de contrôle (6) comprenant :

- des moyens de segmentation (202) configurés pour segmenter une image d'origine (I) capturée par les moyens de capture d'image (3) en sous-images représentatives de chaque pièce ; où chaque sous-image est un bloc (22) de l'image d'origine (I) et les moyens de segmentation (103) du programme de contrôle détectent le bloc (22) et la matrice de caractère correspondante (26) ;
- des moyens de calcul et comparaison de la zone (203) pour le contrôle d'une zone ; lesdits moyens de calcul et comparaison de la zone (203) étant configurés pour calculer la zone de la sous-image, en utilisant le bloc (22) et la matrice de caractère (26) du bloc (22) des moyens de segmentation (202) et la comparer avec une zone significative de la pièce calculée par le programme d'inspection (5), où si ladite comparaison échoue, l'objet est classé comme non conforme ;
- des moyens de calcul et comparaison des grandeurs (208, 209) pour le contrôle morphologique et de couleur ; lesdits moyens de calcul et comparaison (208, 209) étant configurés pour calculer les grandeurs morphologiques et de couleur de chaque sous-image et les comparer aux grandeurs morphologiques et de couleur calculées par le programme d'inspection (5), où si ladite comparaison échoue, l'objet est classé comme non conforme ;
- des moyens de contrôle esthétique (212) pour un contrôle esthétique ; lesdits moyens de contrôle esthétique (212) étant configurés pour alimenter ledit formé réseau neuronal (116, 117) avec les images de pièces individuelles afin de contrôler si le score d'une pièce rentre ou excède un seuil d'acceptabilité calculé par le programme d'inspection (5) et déterminer un état final de la pièce comme conforme ou à mettre au rebut ;

où le contrôle morphologique est effectué uniquement si le contrôle de la zone est conforme, le contrôle de la couleur est effectué uniquement si le contrôle morphologique est conforme et le contrôle esthétique est effectué uniquement si le contrôle de la couleur est conforme.

2. Système selon revendication 1, où lesdites grandeurs morphologiques comprennent :

- la zone du bloc ;
- la largeur de la matrice de caractère minimum ;
- la hauteur de la matrice de caractère minimum ;
- Remplissage : rapport entre la zone du bloc et la zone de la matrice de caractère minimum ;
- Rectangularité : rapport entre la hauteur et la largeur de la matrice de caractère minimum.

3. Système selon revendication 1 ou 2, où chaque valeur limite de seuil pour chaque grandeur morphologique et de couleur est donnée par le triple de la déviation standard ($3\sigma$) de la distribution gaussienne de la grandeur calculée par lesdits moyens de calcul (120).

4. Système (100) selon l'une quelconque des revendications précédentes, où ledit programme d'inspection (5) comprend des moyens d'initialisation (A) configurés de manière à permettre à l'utilisateur de saisir les paramètres (P1, P2, P3, P4) pour le calcul des valeurs limites de seuil.

5. Processus de contrôle qualité comprenant les phases suivantes :

- alimentation des pièces (2) à contrôler sur un transporteur (10),
- capture d'images (101) des pièces (2) sur le transporteur moyennant des moyens de capture d'image (3), et
- exécution, moyennant une unité de commande, d'un programme d'inspection (5) qui prévoit les phases suivantes :

     - identification (106) de la présence de pièces (21) dans une image d'origine (I) capturée par les moyens de capture d'image (3), pour lancer le programme d'inspection (5);
     - segmentation (103) de l'image d'origine (I) en sous-image représentatives de chaque pièce ; où chaque sous-image est une matrice de caractère (26) d'un bloc (22) de l'image d'origine (I) et le bloc (22) et la matrice de caractère correspondante (26) du bloc (22) sont détectés et une pièce individuelle est identifiée par le bloc (22) et par la matrice de caractère (26) du bloc (22) ;
     - calcul des grandeurs (109) où, pour chaque pièce identifiée par les moyens de segmentation (103), des grandeurs morphologiques sont calculées basées sur le bloc (22) et sur la matrice de caractère (26) et des grandeurs de couleur basées sur trois canaux de couleur RGB de l'intensité des pixels de l'image d'origine correspondante au bloc (22) ;
     - calcul des distributions (120) dans lequel une distribution gaussienne est calculée pour chaque grandeur morphologique et de couleur sur la base d'un nombre de pièces échantillon statistiquement significatif ;
     - contrôle de conformité (113) pour vérifier si les grandeurs morphologiques et de couleur calculées pour chaque pièce rentrent dans des limites de seuil dérivées des dites distributions gaussiennes des grandeurs morphologiques et de couleur ;
     - alimentation d'un réseau neuronal (116, 117) avec les images des pièces jugées conformes par le contrôle de conformité (113) et formation du réseau neuronal de manière non supervisée afin d'attribuer un score à chaque sous-image qui représente une pièce ; ledit réseau neuronal étant configuré pour un contrôle esthétique, par exemple une classification neurale relative à l'aspect des échantillons ; et
     - sauvegarde (118) des limites de seuil de chaque grandeur et les grandeurs pour chaque pièce prise en compte ;

    où la segmentation de l'image et le calcul des grandeurs morphologiques et de couleur dans le programme d'inspection (5) est répétée pour un nombre significatif d'échantillons ;
    exécution, moyennant l'unité de commande (4), d'un programme de contrôle (6) qui prévoit les phases de :

     - segmentation (202) d'une image d'origine (I) capturée par les moyens de capture d'image (3) en sous-images représentatives de chaque pièce ; où chaque sous-image est un bloc (22) de l'image d'origine (I), et le bloc (22) et la matrice de caractère correspondante (26) sont détectés ;
     - calcul et comparaison de la zone (203) pour calculer la zone de la sous-image, en utilisant le bloc (22) et la matrice de caractère (26) du bloc (22) détectés dans la segmentation et la comparer avec une zone indicative de la pièce calculée par le programme d'inspection (5), où si la comparaison échoue, l'objet est classé comme non conforme ;
     - calcul et comparaison des grandeurs (208, 209) pour un contrôle morphologique et un contrôle de couleur pour calculer les grandeurs morphologiques et les grandeurs de couleur de chaque sous-image et les comparer aux grandeurs morphologiques et de couleur calculées par le programme d'inspection (5), où si la comparaison échoue, l'objet est classé comme non conforme ;
     - contrôle esthétique (212) pour un contrôle esthétique, où ledit formé réseau neuronal (116, 117) est alimenté avec les images de pièces individuelles afin de vérifier si le score d'une pièce rentre ou dépasse un seuil d'acceptabilité calculé par le programme d'inspection (5) et déterminer un état final de la pièce comme conforme ou à mettre au rebut ;

    où le contrôle morphologique est exécuté uniquement si le contrôle de la zone est conforme, le contrôle de la couleur est exécuté uniquement si le contrôle morphologique est conforme et le contrôle esthétique est exécuté uniquement si le contrôle de la couleur est conforme.

6. Processus selon la revendication 5, où :
    lesdites grandeurs morphologiques comprennent :

     - la zone du bloc ;
     - la largeur de la matrice de caractère minimum ;
     - la hauteur de la matrice de caractère minimum ;
     - Remplissage : rapport entre la zone du bloc et la zone de la matrice de caractère minimum ; et

- Rectangularité : rapport entre la hauteur et la largeur de la matrice de caractère minimum.

7. Processus selon la revendication 5 ou 6, où chaque valeur limite de seuil pour chaque grandeur morphologique et de couleur est donnée par le triple de la déviation (3$\sigma$) de la distribution gaussienne de la grandeur.

8. Processus selon l'une quelconque des revendications de 5 à 7, où ledit programme d'inspection (5) comprend une phase d'initialisation (A) pour permettre à l'utilisateur de saisir les paramètres (P1, P2, P3, P4) pour le calcul des valeurs limites de seuil.

FIG. 1

FIG. 2

FIG. 3

FIG. 4

FIG. 5

FIG. 6

FIG. 7

FIG. 8

FIG. 9

FIG. 9A

FIG. 10

FIG. 10A

I

FIG. 11A

I'

22

22

FIG. 11B

22

21

22

21

FIG. 11C

FIG. 11D

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03025858 A